# EUROPEAN PATENT SPECIFICATION

(11) **EP 0 874 696 B1**
(45) Date of publication and mention of the grant of the patent: **29.05.2002**
(21) Application number: 96944164.1
(22) Date of filing: 20.12.1996
(51) Int. Cl.: B05D 3/12, B05C 21/00, B44D 3/00

(54) **METHOD AND DEVICE FOR WORKING A JOINT BETWEEN TWO ELEMENTS**
VERFAHREN UND VORRICHTUNG ZUR HERSTELLUNG EINER DICHTUNG ZWISCHEN ZWEI ELEMENTEN
PROCEDE ET DISPOSITIF DE REALISATION D'UN JOINT ENTRE DEUX ELEMENTS

(30) Priority: 28.12.1995 SE 9504702
(43) Date of publication of application: 04.11.1998
(73) Proprietor: Eftec Europe Holding AG, 6304 Zug (CH)
(72) Inventor: BRATT, Gunnar, S-461 57 Trollhättan (SE); MARTINSSON, Hans, S-461 42 Trollhättan (SE); NORDSTRÖM, Magnus, S-461 98 Trollhättan (SE); ÖSTGREN, Ake, S-430 63 Hindas (SE)
(74) Representative: Hepp, Dieter
(86) International application number: SE9601726
(87) International publication number: WO9724190

(56) References cited:
- US-A- 4 947 515

## Description

### Technical field

The present invention relates to a method of working a joint between two elements, whereby a jointing compound is applied in a bead along the joint. The invention also relates to a tool for working such a joint between two elements. The invention is of particular interest in connection with elements included in a car body.

### Prior art

In auto manufacture it is often necessary to be able to make an aesthetically pleasing transition between two elements which are joined together, for example, at the transition between two outwardly visible body parts. A common method is to conceal a weld, for example between two body parts with the aid of a decor strip, which is applied with the aid of special fastening elements. Another method is by spackling and sanding to achieve a practically invisible joint. In both these cases the manufacture of the body is made more complicated both as regards material and work. Attempts have therefore been made to achieve an aesthetically pleasing joint in a more simple manner. For this purpose attempts have been made to fill a gutter-shaped portion between two elements with a sealant of polyvinyl chloride, which after surface treatment is painted over. This type of sealant has, however, brought with it various types of problems, i.a. cracking during the great temperature variations which a car body is normally subjected to. A jointing compound of this type has, however, the advantage that it is relatively easy to work with.

### Description of the invention

The invention intends in a simple and safe manner to make a joint between two elements aesthetically pleasing.

This is achieved in the method according to the invention by virtue of the fact that the bead of jointing compound is worked to a predetermined cross-sectional shape by a cutting shaping tool being moved along the bead and planing off an outer layer therefrom, at the same time as the planed-off outer layer is removed by suction above the worked portion of the bead. This provides simply and rapidly a well-shaped transition between the two elements. The surface finish is so good that over-painting can be done without any further surface preparation. The work is facilitated if planing is done in the same direction as the bead is applied and a further simplification is achieved if the jointing compound is applied and planed in the same operation. When both elements are included in a car body and form a groove along the joint, it is furthermore advantageous according to the invention that the jointing compound be applied in the groove in such an amount that it forms after working a smooth transition between the surface portions of the elements adjacent to the groove. This makes it possible to simply and effectively fill even relatively wide and deep grooves so as to obtain an aesthetically pleasing joint.

According to the invention, there can be used as jointing compound with advantage a polyurethane-based sealant. This type of jointing compound can withstand temperature variations very well and also provides a smooth surface, but due to its consistency and stickiness it has previously not been able to be handled satisfactorily in this context.

A particularly well-defined transition between the two elements is obtained if the shaping tool during the planing is supported against at least one of the elements.

According to the invention, a tool used for working a joint between two elements, there being along the joint a jointing compound bead, can consist of a suction nozzle with a suction opening and a cutting implement mounted at the edge thereof which has an edge directed away from the suction opening, whereby the cutting implement, when the tool during working of the bead is moved along the bead, planes off an outer layer from the bead and guides said outer layer into the suction opening, to be taken away. This avoids planed-off jointing compound from winding up on the elements on either side of the bead, at the same time as a smooth surface on the remaining bead can be achieved.

The cutting implement of the tool has with advantage a working surface with a profile corresponding to the predetermined cross-sectional shape of a section of the bead. Thus, varying profile shapes can be given to the remaining bead. A simple shape of the tool is obtained if the suction nozzle has a tubular section at the free end of which the cutting implement is arranged as a circumferential collar delimiting the suction opening.

The utility of the tool increases additionally if the cutting implement and the suction opening are arranged in a replaceable working component, which is preferably of plastic. By making the working component of a suitable plastic, the additional advantage can be achieved of having the jointing compound slide easily along the plastic, at the same time as a certain elasticity of the working component can be easily achieved.

A practical tool according to the invention is obtained if the tool also includes a nozzle for applying jointing compound, the dispensing nozzle and the suction nozzle having their openings facing each other, thus making it possible with the aid of a single tool to provide a finished joint in a single operation.

Additional advantages and characteristics of the invention are revealed in the following description of preferred embodiments.

### Description of the Figures

- Fig 1: shows a perspective view of a device for applying jointing compound,
- Fig 2: shows a section along the line II-II in Fig 1,
- Fig 3: shows a section along the line III-III in Fig 1,
- Fig 4: shows a perspective view of a device for removing jointing compound,
- Fig 5: shows a section along the line V-V in Fig 4,
- Fig 6: shows an end view of the device in Fig 4,
- Fig 7: shows a section along the line VII-VII in Fig 6,
- Fig 8: shows an example of an alternative embodiment of a joint according to the invention,
- Fig 9: shows a tool suitable for use in the embodiment in Fig 8, and
- Fig 10: shows a combination tool for applying and removing jointing compound.

### Description of preferred embodiments

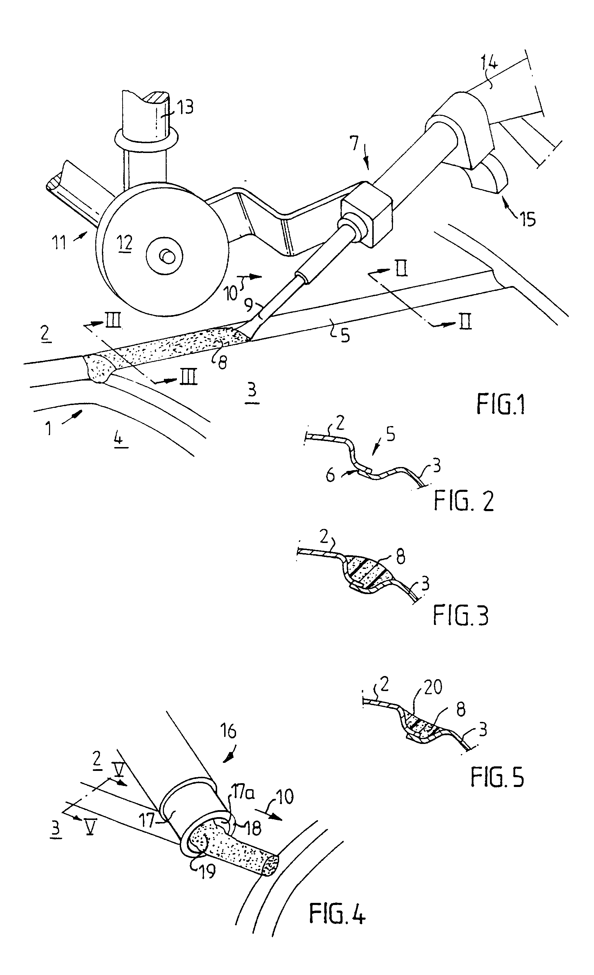

In auto manufacture, a number of body elements are welded together into a body. Fig 1 shows a portion of the left side of a body 1 at the transition between a roof element 2 and a side element 3, which forms the C-beam of the body and is thus located behind a rear door opening 4, alternatively a side window, and in front of a rear window (not shown). The two body elements 2 and 3 are made so that at the transition therebetween there is a groove 5 along a weld 6 (Fig 2) between the body elements.

As can be seen in Fig 1, the groove 5 is filled with the aid of a dispensing device 7 with jointing compound 8 via a dispensing nozzle 9, so that the jointing compound fills the groove 5 with good measure (see Fig 3) as the dispensing device 7 moves in the direction of the arrow 10. In order to achieve an even application of jointing compound, the dispensing device 7 is provided with a drive means 11 including a drive wheel 12, which can rotate at an even speed while resting on the roof element 2. The dispensing device 7 is provided for operation with two handles 13 and 14 and with a regulator 15, with the aid of which the flow of jointing compound can be regulated so that an even bead of jointing compound is applied in the groove 5. It is of course also possible to apply the jointing compound in another manner than that shown here. One possibility, for example, is for an operator to manually move the dispensing nozzle along the groove.

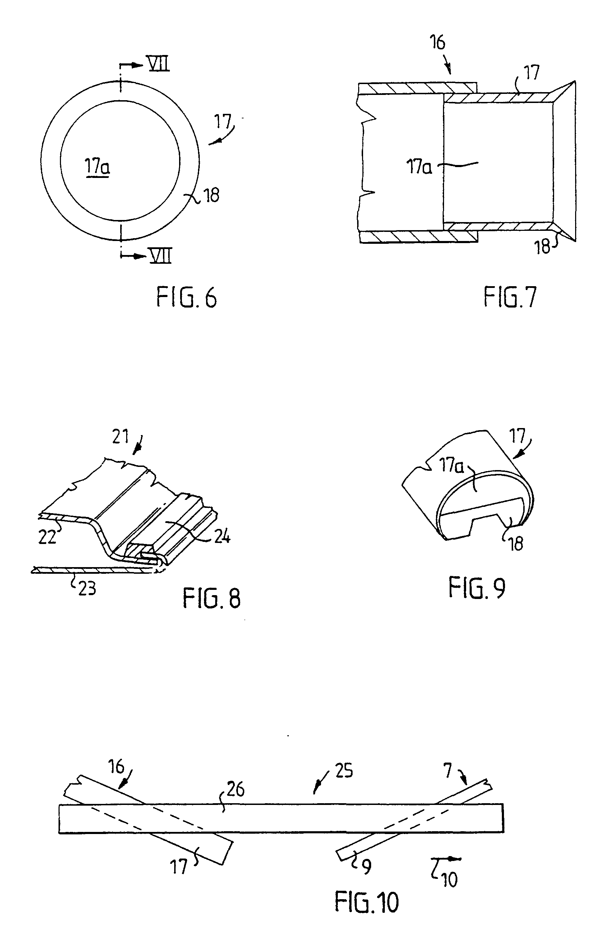

According to the invention, a portion of the jointing compound 8 applied in the groove 5 is removed at the same time as the remaining jointing compound in the groove is shaped so that a smooth, even transition is obtained between the adjacent surfaces of the body elements 2 and 3. How this is achieved is shown in more detail in Fig 4, where a shaping tool in the form of a suction nozzle 16 connected to a suction device (not shown) is moved in at an angle along the groove 5 in the direction of the previously mentioned arrow 10. i.e. in the same direction as the dispensing device 7 is moved. At the front of the suction nozzle 16 there is a replaceably mounted planing piece 17, which in this case is tubular and has a suction opening 17a. Furthermore, the planing piece 17 has a cutting tool 18 in the form of a circumferential collar, which is in contact with and rests on the upper portions of the body elements 2 and 3 defining the groove 5. As can be seen in more detail in Figs 6 and 7, the cutting tool 18 is in the form of a blade with a forwardly directed edge, so that as the suction nozzle 16 is moved forward, it can plane off an outer layer 19 of the jointing compound bead. By suitably adapting the speed at which the suction nozzle 16 is moved and the suction capacity of the suction device, the planed-off layer 19 will be sucked into the planing piece 17 and into the suction device without ever touching any of the body elements 2 and 3. By also making the cutting tool 18 somewhat elastic and shaped to provide a desired soft transition to the surrounding body elements, very good contact with the body elements 2 and 3 can be achieved, so that, as can be seen in Fig 5, a smooth, evenly worked surface 20 can be obtained on the jointing compound 8 remaining in the groove. This surface 20 forms a good transition between the surfaces on the body elements 2 and 3. There will be no need to wipe off edge spill of jointing compound, nor will any surface treatment be necessary in accordance with the invention. Rather, the finished jointing compound can be directly subjected to curing, for example with the aid of IR technology, and then be over-painted.

The shape which the surface of the worked jointing compound receives is determined, as mentioned above, by the shape of the planing piece 17. Fig 8 shows a portion of a vehicle door 21, where along a folded seam between two door panels 22 and 23 there is a fully worked bead 24 of sealant, which was planed to seal the door edge and facilitate painting of the same. The cross-sectional shape shown of the bead 24 has been obtained by using a suction nozzle where the planing piece 17 has the shape shown in Fig 9, and the cutting tool 18 is made to produce the desired profile of the bead 24. Depending on the desired cross-sectional shape of a section of or the entire bead of jointing compound, a number of different embodiments of the planing piece 17 can of course be used as needed.

Up to now application of sealant and planing off of sealant has been shown in separate steps, either completely manually or more or less automated, with suitable supporting devices resting on those portions adjacent to the joint to be worked. It is, however, also possible, as is shown schematically in Fig 10, to use a universal tool 25 where the planing piece 17 included in a suction nozzle 16 is united by means of a holder 26 to the dispensing nozzle 9 of the dispensing device 7. As the universal tool 25 is moved in the direction of the arrow 10 it is possible with a single operation to apply and plane off jointing compound, in accordance with the description previously. Here it is also important that there be a correctly designed support on the worked body parts to provide an even bead of jointing compound and in order to achieve the desired planing depths into the bead and the desired shape of the finished bead.

It has proved expedient to use as a jointing compound a polyurethane-based, curable sealant. Particularly suited for this purpose has been a sealant marketed by EMS-TOGO AG in Switzerland under the name TOGOCOLL FM 541/92113. This product is a single-component, polyurethane-based thermo-setting sealant with excellent viscosity properties, good over-painting properties and outstanding cold flexibility. It has a thermo-setting range of between 100° and 180°C for 20 - 30 minutes. The density is 1.56 g/cm³ at 20°C. By using a jointing compound of this type, there is obtained in accordance with the invention, in addition to good sealing of the joint in question, also the possibility of shaping the sealant in a simple and advantageous manner for the purpose of simplifying manufacture. The surface finish obtained by the planing operation is sufficient so that after thermo-setting no additional work is necessary before painting over.

The principles of the above described method and devices can of course be applied in other contexts than in just auto manufacture, with possible adaptions to the need in question.

The jointing compound, which in accordance with the invention is planed off from the applied bead, can with advantage be collected in a special container in the suction device, for re-use later. The curing of planed jointing compound can be done with advantage by means of IR-technology.

## Claims

1. Method of working a joint between two elements (2, 3), wherein jointing compound (8) is applied in a bead along the joint, **characterized in that** the bead of jointing compound (8) is worked to a predetermined cross-sectional shape by a cutting shaping tool (16) being moved forward along the bead and planing off an outer layer (19) therefrom, at the same time as the outer layer planed off by means of the shaping tool is removed by suction, so that a worked portion of the bead remains where the shaping tool has passed.

2. Method according to Claim 1, **characterized in that** planing off is performed in the same direction as the bead is applied.

3. Method according to Claim 2, **characterized in that** jointing compound is applied and removed in the same operation.

4. Method according to one of Claims 1 - 3, where the elements (2, 3) are included in an auto body and form a groove (5) along the joint, **characterized in that** jointing compound (8) is applied in the groove (5) in such an amount that it forms after working a smooth transition (20) between the surface portions of the elements adjacent to the groove.

5. Method according to one of Claims 1 - 4, **characterized in that** there is used as a jointing compound a polyurethane-based sealant.

6. Method according to one of Claims 1 - 5, **characterized in that** during the planing off, the shaping tool (16) is supported against at least one of the elements (2, 3).

7. Tool for working a joint between two elements (2, 3), there being along the joint a jointing compound bead (8), **characterized in that** the tool is a suction nozzle (16) with a suction opening (17a) and a cutting implement (18) mounted at the edge thereof, which has an edge directed away from the suction opening, whereby the cutting implement, when the tool during working of the bead is moved forward along the bead, planes off an outer layer (19) from the bead and guides said outer layer into the suction opening (17a) to be taken away, so that a worked portion of the bead remains where the shaping tool has passed.

8. Tool according to Claim 7, **characterized in that** the cutting implement (18) has a working surface with a profile corresponding to a predetermined cross-sectional shape on at least one section of the bead.

9. Tool according to Claim 7 or 8, **characterized in that** the suction nozzle has a tubular section (17), at the free end of which the cutting implement (18) is arranged as a circumferential collar, which delimits the suction opening (17a).

10. Tool according to one of Claims 7 - 9, **characterized in that** the cutting implement (18) and the suction opening (17a) are arranged in a replaceable planing piece (17), which is preferably of plastic.

11. Tool according to one of Claims 7 - 10, **characterized in that** included in the tool is also a dispensing nozzle (9) for applying jointing compound, said dispensing nozzle (9) and the suction nozzle (16) having their openings facing towards each other.

## Patentansprüche

1. Verfahren zum Bearbeiten einer Nahtstelle zwischen zwei Elementen (2, 3), wobei eine Dichtungsmasse (8) in einem Wulst entlang der Nahtstelle eingebracht wird,
**dadurch gekennzeichnet,**
**dass** der wulst der Dichtmasse (8) in eine vorbestimmte Querschnittsform durch ein Schneid-Formgebungswerkzeug (16) bearbeitet wird, welches vorwärts entlang des Wulstes bewegt wird und eine äußere Schicht (19) davon weghobelt, wobei zur gleichen Zeit die durch das Formgebungswerkzeug weggehobelte äußere Schicht durch eine Absaugung entfernt wird, so dass ein bearbeiteter Teil des Wulstes verbleibt, wo das Formgebungswerkzeug vorbeibewegt worden ist.

2. Verfahren nach Anspruch 1,
**dadurch gekennzeichnet,**
**dass** das weghobeln in der selben Richtung durchgeführt wird wie das Aufbringen des Wulstes.

3. Verfahren nach Anspruch 2,
**dadurch gekennzeichnet,**
**dass** die Dichtmasse in demselben Arbeitsschritt aufgebracht und entfernt wird.

4. Verfahren nach einem der Ansprüche 1 bis 3, wobei die Elemente (2, 3) in einer Fahrzeugkarosserie beinhaltet sind und eine Nut (5) entlang der Verbindungsstelle ausformen,
**dadurch gekennzeichnet,**
**dass** die Dichtungsmasse (8) in die Nut (5) in solch einer Menge eingebracht wird, dass sie nach der Bearbeitung einen sanften Übergang (20) zwischen den Oberflächen der Elemente, welche benachbart der Nut sind, ausformt.

5. Verfahren nach einem der Ansprüche 1 bis 4,
**dadurch gekennzeichnet,**
**dass** als Dichtmasse ein Dichtungsmittel auf Polyurethanbasis eingesetzt wird.

6. Verfahren nach einem der Ansprüche 1 bis 5,
**dadurch gekennzeichnet,**
**dass** während des Weghobelns das Formgebungswerkzeug (16) gegen zumindest eines der Elemente (2, 3) abgestützt ist.

7. Werkzeug zum Bearbeiten einer Nahtstelle zwischen zwei Elementen (2, 3), wobei entlang der Nahtstelle ein Dichtungsmassenwulst (8) vorliegt,
**dadurch gekennzeichnet,**
**dass** das Werkzeug eine Absaugdüse (16) mit einer Absaugöffnung (17a) und eine an deren Kante befestigte Schneid-Hilfseinrichtung (18) ist, die eine Kante aufweist, welche weg von der Absaugöffnung gerichtet ist, wobei die Schneid-Hilfseinrichtung, wenn das Werkzeug während der Bearbeitung des Wulstes vorwärts entlang des Wulstes bewegt wird, eine äußere Schicht (19) des Wulstes weghobelt und die äußere Schicht in die Absaugöffnung (17a) zu deren Entfernen leitet, so dass ein bearbeiteter Abschnitt des Wulstes verbleibt, wo das Formgebungswerkzeug vorbeibewegt worden ist.

8. Werkzeug nach Anspruch 7,
**dadurch gekennzeichnet,**
**dass** die Schneid-Hilfseinrichtung (18) eine Bearbeitungsoberfläche mit einem Profil aufweist, welches einer vorbestimmten Querschnittsform an zumindest einem Abschnitt des Wulstes entspricht.

9. Werkzeug nach Anspruch 7 oder 8,
**dadurch gekennzeichnet,**
**dass** die Absaugdüse einen röhrenförmigen Abschnitt (17) aufweist, an dessen freiem Ende die Schneid-Hilfseinrichtung (18) als ein umlaufender Kragen angeordnet ist, welcher die Absaugöffnung (17a) abgrenzt.

10. Werkzeug nach einem der Ansprüche 7 bis 9,
**dadurch gekennzeichnet,**
**dass** die Schneid-Hilfseinrichtung (18) und die Absaugöffnung (17a) in einem auswechselbaren Hobelstück (17) angeordnet sind, welches vorzugsweise aus Plastik ist.

11. Werkzeug nach einem der Ansprüche 7 bis 10,
**dadurch gekennzeichnet,**
**dass** das Werkzeug ebenfalls eine Abgabedüse (9) zum Aufbringen der Dichtungsmasse aufweist, wobei die Abgabedüse (9) und die Absaugdüse (16) zueinander weisende Öffnungen besitzen.

## Revendications

1. Méthode pour façonner un joint entre deux éléments (2, 3), selon laquelle un composé pour joint (8) est appliqué sous forme de chenille le long du joint, **caractérisée en ce qu'**on façonne la chenille de composé pour joint (8) suivant une forme de section transversale prédéterminée, en avançant le long de la chenille un outil de formage coupant (16) et en raclant une couche extérieure (19) sur la chenille en même temps que cette couche extérieure raclée à l'aide de l'outil de formage est éliminée par aspiration, de sorte qu'une partie façonnée de la chenille reste là où l'outil est passé.

2. Méthode selon la revendication 1, **caractérisée en ce que** le raclage est effectué dans la même direction que l'application de la chenille.

3. Méthode selon la revendication 2, **caractérisée en ce que** le composé pour joint est appliqué et éliminé lors de la même opération.

4. Méthode selon l'une des revendications 1 à 3, selon laquelle les éléments (2, 3) sont intégrés à une carrosserie automobile et forment une rainure (5) le long du joint, **caractérisée en ce que** le composé pour joint (8) est appliqué dans la rainure (5) suivant une quantité telle qu'il forme, une fois façonné, une transition lisse (20) entre les parties de surface des éléments voisins de ladite rainure.

5. Méthode selon l'une des revendications 1 à 4, **caractérisée en ce qu'**on utilise comme composé pour joint un matériau d'étanchéité à base de polyuréthanne.

6. Méthode selon l'une des revendications 1 à 5, **caractérisée en ce que** pendant le raclage, l'outil de formage (16) est en appui contre l'un au moins des éléments (2, 3).

7. Outil pour façonner un joint entre deux éléments (2, 3), étant précisé que le long du joint, il y a une chenille de composé pour joint (8), **caractérisé en ce que** l'outil est un suceur (16) avec une ouverture d'aspiration (17a) et un élément coupant (18) qui est monté sur le bord de celle-ci et qui présente une arête dirigée à l'opposé de l'ouverture d'aspiration, moyennant quoi l'élément coupant, quand l'outil avance le long de la chenille pendant le façonnage de celle-ci, racle une couche extérieure (19) de ladite chenille et guide la couche extérieure jusque dans l'ouverture d'aspiration (17a) afin de l'évacuer, de sorte qu'une partie façonnée de la chenille reste là où l'outil coupant est passé.

8. Outil selon la revendication 7, **caractérisé en ce que** l'élément coupant (18) a une surface de façonnage avec un profil qui correspond à une forme de section transversale prédéterminée sur au moins une section de la chenille.

9. Outil selon la revendication 7 ou 8, **caractérisé en ce que** le suceur a une section tubulaire (17) à l'extrémité libre de laquelle l'élément coupant (18) est disposé sous la forme d'une collerette circonférencielle qui délimite l'ouverture d'aspiration (17a).

10. Outil selon l'une des revendications 7 à 9, **caractérisé en ce que** l'élément coupant (18) et l'ouverture d'aspiration (17a) sont disposés dans une pièce de raclage remplaçable (17) de préférence en matière plastique.

11. Outil selon l'une des revendications 7 à 10, **caractérisé en ce qu'**il comprend aussi un éjecteur (9) destiné à appliquer le composé pour joint, l'ouverture de l'éjecteur (9) et celle du suceur (16) se faisant face.
